(19)

**Europäisches Patentamt**
**European Patent Office**
**Office européen des brevets**

(11) **EP 4 158 309 B1**

(12) **EUROPEAN PATENT SPECIFICATION**

(45) Date of publication and mention
of the grant of the patent:
**21.01.2026  Bulletin 2026/04**

(21) Application number: **21720712.5**

(22) Date of filing: **19.04.2021**

(51) International Patent Classification (IPC):
**G01N 15/14** *(2024.01)*      **G01N 22/00** *(2006.01)*

(52) Cooperative Patent Classification (CPC):
**G01N 15/1031; G01N 15/0266; G01N 15/1023;**
G01N 15/01; G01N 22/00; G01N 2015/0294;
G01N 2015/1006; G01N 2015/1029;
G01N 2015/103

(86) International application number:
**PCT/EP2021/060060**

(87) International publication number:
**WO 2021/239331 (02.12.2021 Gazette 2021/48)**

(54) **METHOD AND DEVICE FOR LABEL-FREE, SINGLE BIOLOGICAL CELL DIELECTRIC SPECTROSCOPY**

VERFAHREN UND VORRICHTUNG ZUR MARKIERUNGSFREIEN, DIELEKTRISCHEN EINZELZELLENSPEKTROSKOPIE

PROCÉDÉ ET DISPOSITIF POUR SPECTROSCOPIE DIÉLECTRIQUE DE CELLULE BIOLOGIQUE UNIQUE SANS ÉTIQUETTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2020  DE 102020206629**

(43) Date of publication of application:
**05.04.2023  Bulletin 2023/14**

(73) Proprietor: **Universität  Hamburg**
**20148 Hamburg (DE)**

(72) Inventors:
• **BLICK, Robert**
  **22763 Hamburg (DE)**
• **GWOZDZ, Paul**
  **22457 Hamburg (DE)**
• **SINGH, Udai Raj**
  **22459 Hamburg (DE)**
• **GUSE, Andreas**
  **22459 Hamburg (DE)**
• **HERNANDEZ, Lola**
  **22307 Hamburg (DE)**
• **DIERCKS, Björn-Philipp**
  **22399 Hamburg (DE)**

(74) Representative: **Hoffmann Eitle**
**Patent- und Rechtsanwälte PartmbB**
**Arabellastraße 30**
**81925 München (DE)**

(56) References cited:
**US-A1- 2015 035 546**

• **YANG YANG ET AL: "Distinguishing the viability of a single yeast cell with an ultra-sensitive radio frequency sensor", LAB ON A CHIP, vol. 10, no. 5, 26 January 2010 (2010-01-26), UK, pages 553, XP055816188, ISSN: 1473-0197, DOI: 10.1039/b921502f**
• **MARIAM HOUSSEIN ET AL: "Dielectric Spectroscopy Characterization within a Microfluidic Device based on Open-Ended Coplanar Waveguide", 2020 14TH EUROPEAN CONFERENCE ON ANTENNAS AND PROPAGATION (EUCAP), EURAAP, 15 March 2020 (2020-03-15) - 20 March 2020 (2020-03-20), pages 1 - 5, XP033788955, DOI: 10.23919/EUCAP48036.2020.9135471**

- **ABHISHEK BHAT ET AL: "A tank-circuit for ultrafast single particle detection in micropores", ARXIV.ORG, CORNELL UNIVERSITY LIBRARY, 201 OLIN LIBRARY CORNELL UNIVERSITY ITHACA, NY 14853, 3 November 2017 (2017-11-03), XP081310612, DOI: 10.1103/ PHYSREVLETT.121.078102**

## Description

## Technical Field

The present invention generally relates to a method and device for label-free, single biological cell dielectric spectroscopy.

## Background

Dielectric spectroscopy is a method which was pioneered by Schwan (Schwan et al., Proceedings of the IEEE, 1980, 68, 104-113) who demonstrated that the electronic response of biological tissue, that is exposed to an AC field, has a rich frequency dependence. It has been shown that tissue, which is exposed to low frequency (low kHz) fields exhibits a low conductivity and an extremely high dielectric constant together with a characteristic low frequency dispersion. Increasing the frequency (tens of MHz) leads to a second dispersion which is caused by the membrane structure of the biological tissue, theoretically described by the Maxwell-Wagner effect (i.e. due to the presence of a highly conductive cell interior surrounded by a poorly conducting cell membrane). At high frequencies (high MHz to GHz range) however the membrane, which is in a first approximation a nonconductive entity separating two fluidic compartments, is electrically shorted out such that the AC field can penetrate the membranes and thus the measurement becomes sensitive to the intercellular medium. The three dispersions are commonly known as $\alpha$-, $\beta$-, and, $\gamma$-dispersions and these dispersions were observed for different tissues by Gabriel (Gabriel et al., Physics in Medicine and Biology, 1996, 41, 2271-2293) where they showed that depending on the type of tissue the details of these overall frequency dependent dielectric permittivity and electrical conductivity varies.

As a matter of fact, dielectric spectroscopy holds the potential for delivering a non-invasive and label free characterization method for cells and tissue. On the tissue level it was shown, e.g. that the dielectric properties change in malignant liver tissue, lung tissue, breast cells to name only some examples. Nevertheless, the main drawback of the majority of the cited experiments is the fact that the electronic response is measured using an open coaxial probe which is brought into mechanical contact with the tissue under investigation. This tissue sample is typically macroscopic in size and thus the measurement result intrinsically reflects on an average over the measured sample. As biological matter can potentially be extremely heterogeneous, measuring the dielectric properties of single cells is in general favourable.

With the advent of microfluidic and integrated electronics some promising measurement setups were presented that are capable to perform dielectric spectroscopy on single cells. The theory of interpreting the measurement results is discussed in many publications (e.g. Sun et al., Langmuir 2010, 26, 3821-3828). There are some reviews giving information on state of the art measurement strategies (e.g. Sun et al., Microfluidics and Nanofluidics, 2010, 8, 423 - 443).

A rather early device capable to measure single cells translocating through a micro-channel and passing two in-plane electrodes was demonstrated by Ayliffe in 1999 (Ayliffe et al., Journal of Microelectromechanical Systems, 1999, 8, 50-57). They were able to show that red blood cells and granulocytes show different magnitude and phase signals at frequencies up to 2 MHz. A high-speed measurement setup based on planar CPW structures was demonstrated by Wood (Wood et al., Applied Physics Letters 2005, 87, 184106) who were able to demonstrate sensitive detection of single particles translocating over a flat CPW structure, which was structured on the substrate in a microfluidic channel at a frequency of 170MHz. Two years later they optimized their sensor by using two parallel facing electrodes within a microfluidic channel which was operating at 100MHz. A similar approach which was based on a rolled up CPW structure was demonstrated by Bausch (Bausch et al., Scientific Reports, 2017, 7, 41584) which operated at about 177MHz and which was used for T cell counting. Another method was demonstrated by Ferrier (Ferrier et al., Lab on a Chip, 2009, 9, 3406) who showed that they are able to sense single cells and polystyrene beads translocating over interdigital transducers (IDTs) in a microfluidic channel with frequencies as high as 1.6GHz. In their device they were able to not only sense the particles but with a superimposed AC field they were able to elevate the cells during translocation by dielectrophoresis.

US 2015/035546 A1 discloses tunable RF sensors that provide detection and analysis of single cells and particles. The tunable RF sensors are configured as tunable interferometers, wherein cells or particles to be analyzed are passed through a channel, such as a microfluidic channel, across waveguides corresponding to reference and test branches of the interferometers. A network analyzer coupled to the interferometers can be configured to measure a plurality of scattering parameters, such as transmission scattering coefficients of the reference and test branches, to evaluate characteristics of cells passing through the channel. A plurality of tunable interferometers may be employed, each interferometer operating in different frequency bands such that information obtain from the plurality of interferometers may be combined to provide further information.

YANG YANG ET AL: "Distinguishing the viability of a single yeast cell with an ultra-sensitive radio frequency sensor", LAB ON A CHIP, UK, (20100126), vol. 10, no. 5, doi:10.1039/b921502f, ISSN 1473-0197, page 553, XP055816188 discloses a radio frequency sensor to detect a single yeast cell and distinguish its viability in a microfluidic channel. On-chip interference is used to cancel background probing signals to improve sensor sensitivity.

Summary of the Invention

Technical Problem

All the methods mentioned above have disadvantages regarding the manufacturing simplicity and limited sensing frequency. The above methods also cannot provide ultrafast single cell detection of the internal state or morphological state of biological cells.

Solution

In order to overcome the above technical limitations, a label-free, single biological cell dielectric spectroscopy method according to a first aspect of the invention comprises the steps of claim 1. Preferred embodiments are defined by the dependent claims 2 - 6. In order to overcome the above technical limitations, a device for performing label-free, single biological cell dielectric spectroscopy according to a second aspect of the invention coprises the features of claim 7.

**Brief description of the Drawings**

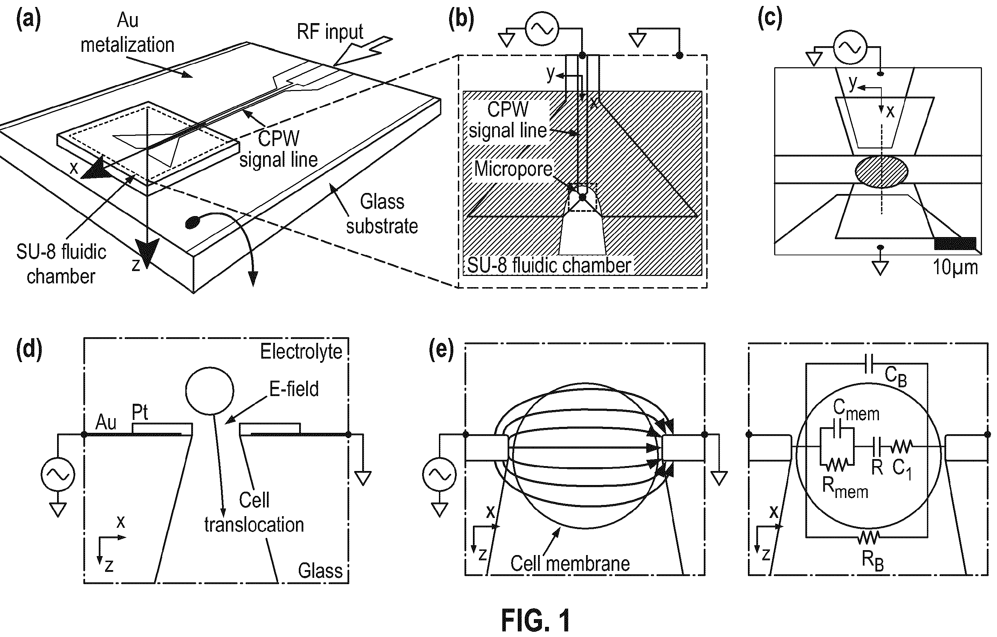

Fig. 1 (a) Schematic of the glass based RF chip. The glass has a thickness of $170\mu m$ and a Au CPW patterned on top. The MP is located at the open end of the CPW signal line and the signal region around the MP is isolated from the electrolyte solution with a $200\mu m$ SU-8 based fluidic channel. Fig. 1 (b) Top view onto the signal region. The ground metallization is moved out thus reducing fringing field at the signal region. Fig. 1 (c) SEM image of the sensing region. In yellow the Au metallization is shown and in orange the Pt electrodes that are patterned with the FIB induced Pt deposition. The region between the electrodes is milled away with the FIB to prevent a short circuit between the signal line and the ground. Fig. 1 (d) Side-view through the MP. Thick Pt electrodes are patterned locally at the vicinity of the MP producing a strong electrical RF field across the MP. Cells suspension is pipetted onto the signal region and cell translocation is induced by an applied suction. Fig. 1 (e) Illustration of the electrical field between the signal line and the ground metalization (left) and an equivalent circuit model of a translocating cell.

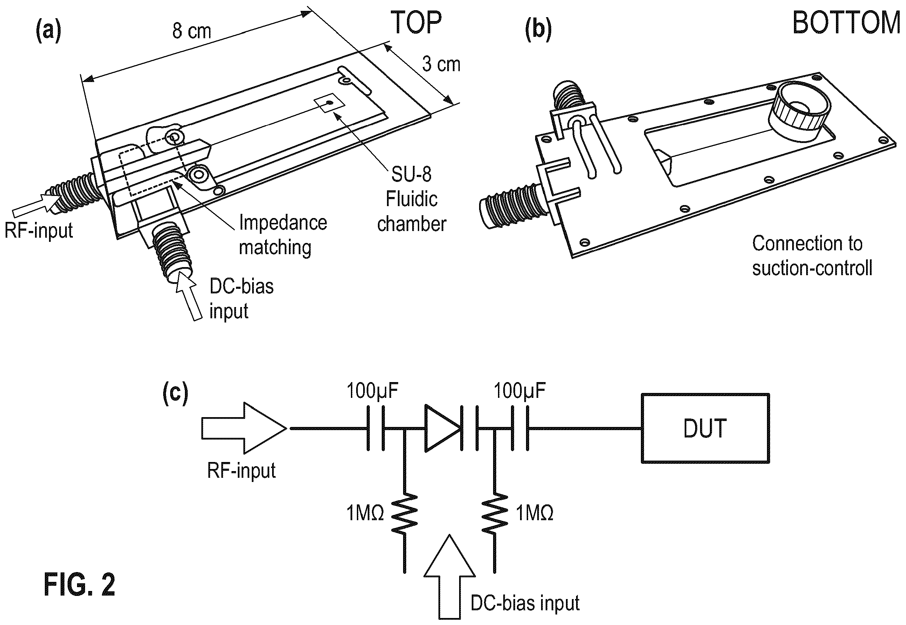

Fig. 2 (a) and Fig. 2 (b) A photograph of the top and bottom of the measurement chip, respectively. Fig. 2(c) shows a schematic of the impedance matching circuit.

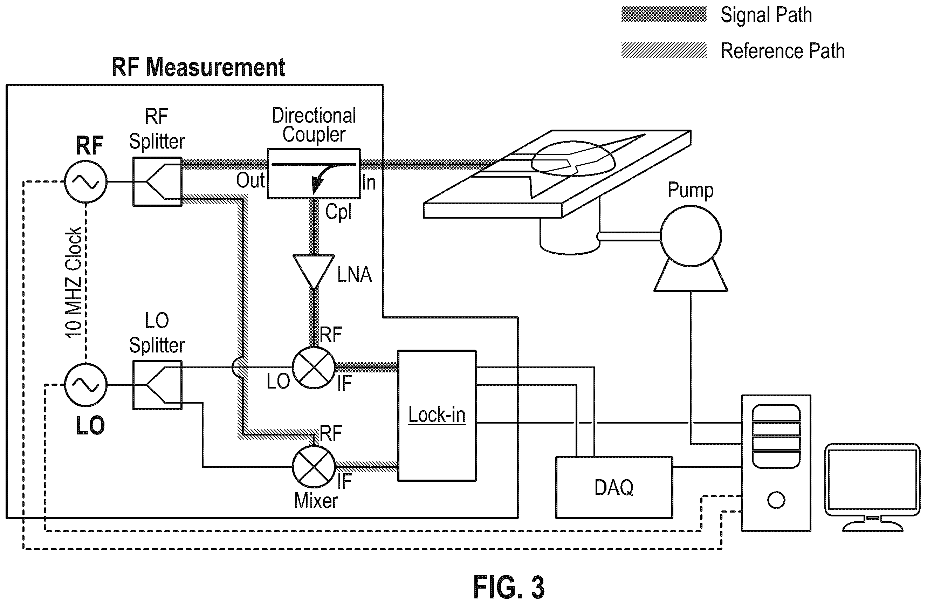

Fig. 3 shows a detailed schematic of the whole setup. The core of the heterodyne mixing setup is a frequency mixer which is used for the frequency down-conversion.

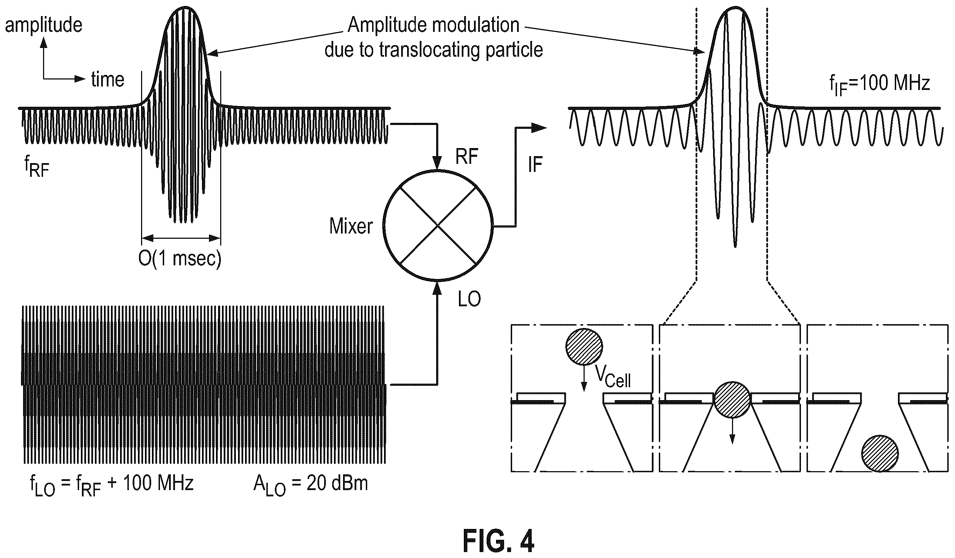

Fig. 4 Schematic of the heterodyne mixing. A translocating cell produced an amplitude modulation of the carrier wave having a frequency in the range of 700 MHz. Not only the amplitude of the reflected signal is modulated (red envelope) but the phase is modulated, too. The 700 MHz signal is down converted using a frequency mixer that uses a local oscillator wave. For sensing the low frequency IF frequency term is processed.

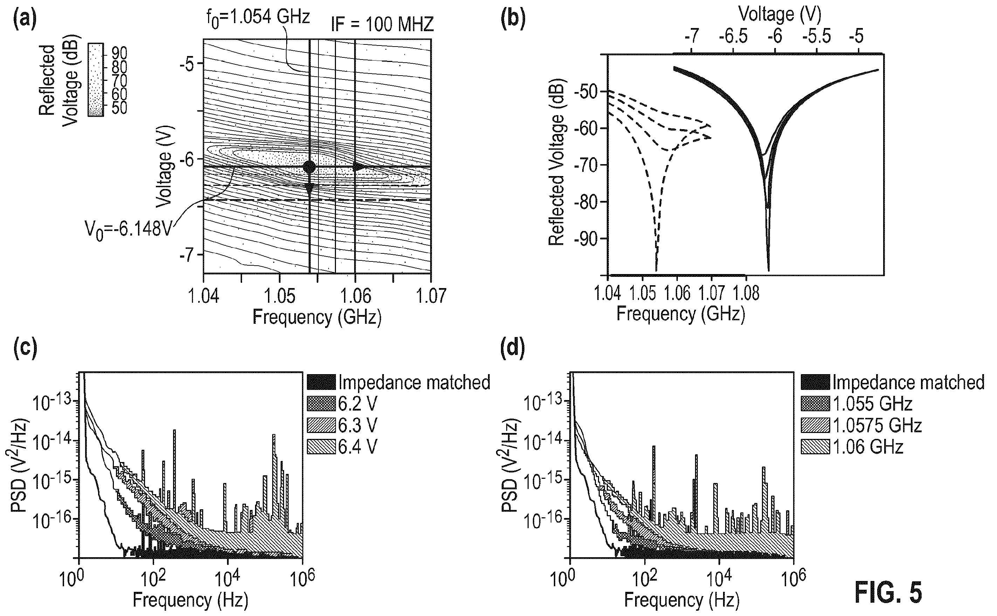

Fig. 5 (a) Impedance matching of the RF chip at fixed RF frequency and RF power. Fig. 5 (b) Reflection measurements for different varactor voltages and input frequencies showing that the quality of the match decreases with values different from $f_0$ and $V_0$. Fig. 5 (c) and Fig. 5 (d) Power spectral density for the investigated adjustments of driving frequency $f_0$ and varactor voltage $V_0$.

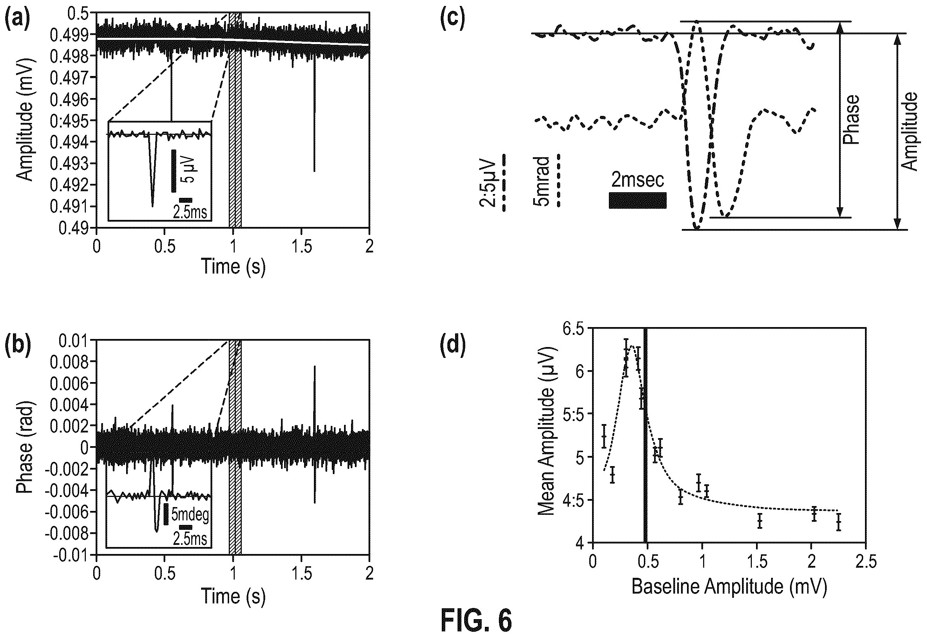

Fig. 6 (a) Measured time domain data of the reflected amplitude. Every peak represents the translocation of an individual T cell through the MP. (zoomed-in) One individual translocating event. Fig. 6 (b) Corresponding phase change induced by the same cell translocations. Fig. 6 (c) Overlay of the amplitude and phase signals from a translocation event. Fig. 6 (d) Mean peak amplitude from translocating T cells versus the mean baseline amplitude which is adjusted by the value of the varactor voltage.

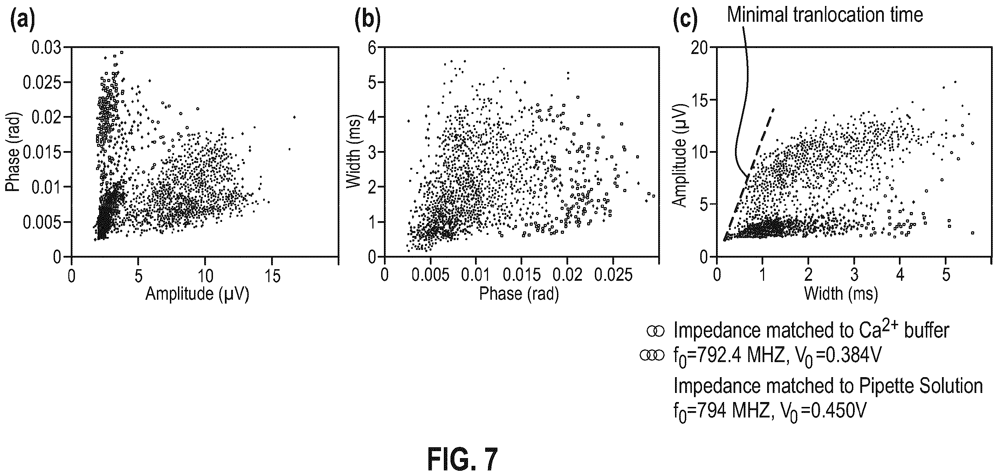

Fig. 7 (a) Amplitude of reflected signal versus phase shift of polystyrene beads (blue) and T cells suspended in $Ca^{2+}$ buffer (magenta) and T cells suspended in pipette solution (red). Fig. 7 (b) and Fig. 7 (c) Corresponding scatterplots for the phase versus the width and the width versus the amplitude, respectively. As the measurements are done in different electrolyte solutions the point of optimal impedance is slightly altered when the liquid is interchanged. Open light red and light magenta circles represent events when the device is impedance matched to the $Ca^{2+}$ buffer and red, blue and magenta solid circles represent measurements taken with a device which is impedance matched to the pipette solution.

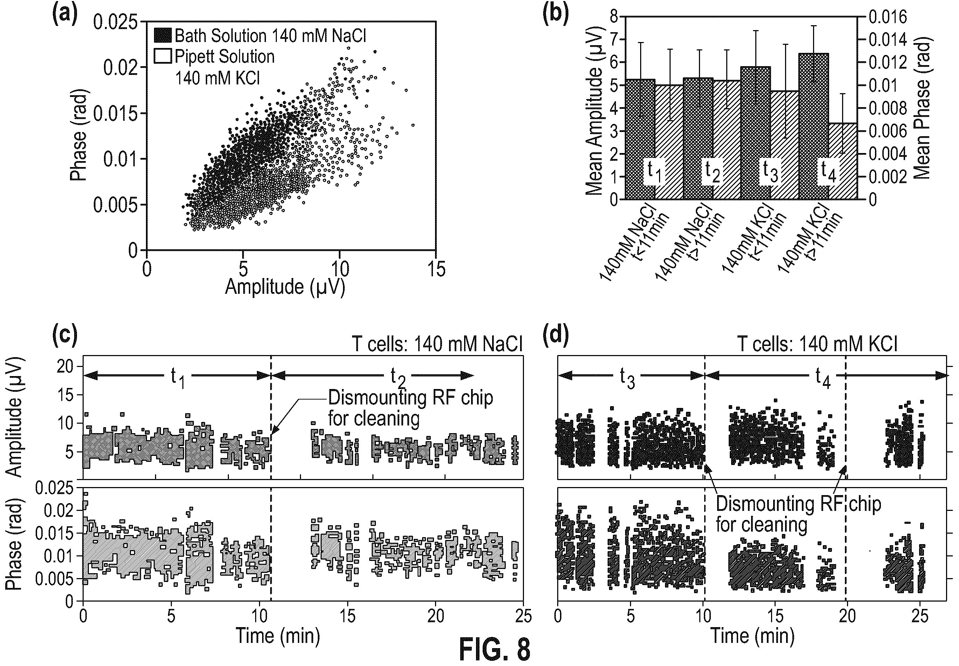

Fig. 8 (a) Correlation between the amplitude and the phase of T cells suspended in (green) physiological bath solution and (violet) unphysiological pipette solution. In the pipette solution two correlations are visible. Fig. 8 (b) Mean amplitude and phase for the different experiments showing that the neither the amplitude nor the phase changes over time for the physiological buffer. On the other hand for the pipette solution in the first 11min the mean amplitude is slightly higher compared to the physiological buffer for times bigger than 11min it even increases. The phase decreases after 11min in this buffer. Fig. 8 (c) and Fig. 8 (d) Time evolution of the reflected amplitude and phase for both buffer. It can be observed that the phase drastically decreases after 10min in the unphysiological buffer.

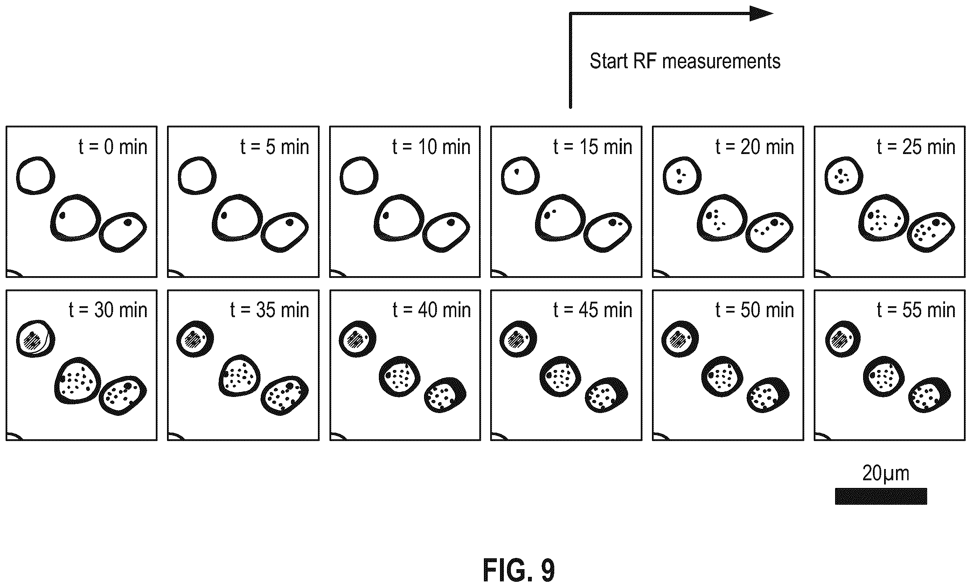

Fig. 9 Time resolved microscopy of three T cells in pipette solution. The cell membrane becomes wrinkly after about 15min in the buffer. After 30min the cell membrane becomes visible and the overall cell diameter decreases because the cells loose intercellular liquid. The approximate starting point of the RF measurements is given in the figure. It is caused by the fact that the cells have to be resuspended from their culturing medium into the final buffer before the measurement can be started. The overall time for this process is about 15min. During this time the cells have had contact with the medium already.

## Detailed Embodiments

Example embodiments of the invention are now described in detail with reference to the accompanying figures. It is noted that the following description contains examples only and should not be construed as limiting the invention.

According to an embodiment, a label-free (i.e. without using dyes, biomarkers or the like), single biological cell dielectric spectroscopy method is provided and comprises the following steps. A biological cell is translocated through a micropore (MP) or channel. The MP or channel is embedded in substrate and interfaces with a coplanar waveguide (CPW) while the biological cell experiences RF fields of at least 700 MHz provided via an RF input port to the coplanar waveguide.

Here, the translocation through the pore may be achieved by a voltage or pressure gradient or suction using a pump (induced fluidic flow driving translocation). Translocation times of cells through the MP or channel are typically in the sub-microsecond to millisecond range.

In addition, the diameter of the MP or channel may be between 50 nm and 50 $\mu$m, typically has a conical shape and is filled with an appropriate electrolyte. The MP or channel is positioned at one end (open end) of a signal line of the CPW which is provided on top of the substrate.

The RF fields of at least 700 MHz propagate along the CPW from an RF input reaches the one end of the signal line and creates a strong electric field between itself and the opposing ground electrode. A biological cell which is translocating through the pore/channel is acted upon the electric field, locally changing the dielectric permittivity of the sensing volume and thus changing temporarily the electrical parameters of the device; this modulation can be measured in reflection or transmission and the measured quantities will be used for cell characterization

According to a further step of the label-free, single biological cell dielectric method, a time domain measurement of at least one RF signal reflected from or transmitted to a Device under test (DUT) is performed. In one preferred embodiment, the DUT is the input port and the time domain measurement is preformed on the RF signal reflected back to the input port. Here, the reflected RF signal is an amplitude- and phase-modulated signal due to the translocating biological cell.

According to a further step of the label-free, single biological cell dielectric method, an amplitude change and a phase change is determined from the reflected or transmitted at least one RF signal due to the translocating biological cell to determine an internal state or a morphological state of the biological cell. The amplitude and phase changes are transient changes indicating that the biological cell is translocating through the MP or channel. The present inventors have further surprisingly realized that a particular internal cell state such as a particular cell death state (apoptotic cell death (programmed cell death), necrotic cell death), a particular cell differentiating state, or a particular morphological state of the biological cell such a wrinkly cell membrane, an intact cell membrane or the like can be determined from the transient changes of amplitude and phase.

In accordance with the present invention, the label-free, single biological cell dielectric spectroscopy method is performed in such a way that the translocating biological cell simultaneously experiences a plurality of RF fields of different wavelengths, for example up to 5 different RF fields simultaneously. Accordingly, the transient amplitude and phase changes are preferably determined for each of the simultaneous RF signals.

Such a configuration allows for a tomographic characterization of the translocating biological cell at the plurality of RF fields. In particular, the internal state or the morphological state of the biological cell can thus be determined using a plurality of simultaneously applied RF fields. As such, this allows for a combination of ultrafast and high-throughput single cell determination (such a cell counting, and cell size determination) with a corresponding simultaneous tomographic characterization.

In accordance with the present invention, the coplanar waveguide is configured as a multi-mode coplanar waveguide, i.e. to provide a sufficient bandwith to provide signal line transmission for the plurality of simultaneously applied RF fields.

The multi-mode coplanar waveguide configuration is be achieved by providing a tapered transition electrode or tapered CPW signal line. In particular, the tapered transition electrode or tapered CPW signal line may be tapered off toward the MP or the channel not only at the tips of the signal line (to locally increase the field strength) but over essentially the entire length of the transition electrode or CPW signal line. As will be further discussed below, this specific configuration of the tapered signal line does not have a constant gap between itself and the ground metallization but is tapered off, thus introducing a varying gap over the essentially entire length of the signal line (i.e. starting from the RF input). This is in difference to standard CPW signal lines (such as in US 10,151,741) in which a constant gap is provided (in an area other than the tip of the signal line).

In a preferred embodiment, apoptotic cell death of the biological cell (as an example of the internal state of the cell) may be if the determined phase change is a predetermined value below a corresponding phase change of a non-apoptotic biological cell while the determined amplitude change corresponds to an amplitude change of the non-apoptotic biological cell. In other words, apoptotic cell death may be determined from the observation that the phase change decreases (as compared to an expected phase change of a cell not undergoing programmed cell death, i.e. a healthy cell) while the amplitude change remains essentially unchanged. The skilled person understands that this may be determined in conjunction with scatterplots (representing phase and amplitude information and the determination of different clusters), or the like.

A corresponding device for performing label-free, single biological cell dielectric spectroscopy comprises: a micropore or channel embedded in a substrate and interfaced with a coplanar waveguide, the micropore or channel being configured for translocating a biological cell through a micropore while the biological cell experiences RF fields of at least 700 MHz provided via an RF input port to the coplanar waveguide; a measurement unit for performing a time domain measurement of at least one RF signal reflected from or transmitted to a device under test (DUT, e.g. the RF input port); and a determination unit for determining an amplitude change and a phase change based on the reflected at least one RF signal due to the translocating biological cell to determine an internal state of the biological cell.

The present device for performing label-free, single biological cell dielectric spectroscopy comprises a coplanar waveguide (CPW) on top of a substrate, e.g. a microscope glass slide. A micropore (MP) or a channel is drilled directly into the substrate (e.g. glass), e.g. by laser ablation from an ArF excimer laser. This allows for a rapid preparation of the sensing region because the pore drilling can be tuned in a way that the pore diameter can be varied from about tens of nm (e.g. 50 nm) to tens of $\mu$m (e.g. 50 $\mu$m). As the characterization of T cells is exemplified in the present description, the following explanation will use a MP or channel with a diameter of 11$\mu$m as an example. The skilled person understands that the concept of the present invention can be applied to other biological cells and different diameters.

The MP or channel is embedded in the substrate and may be embedded between the open end of the signal line of the CPW and a neighbouring ground metallization (see Fig. 1) and consequently by applying a RF field to the CPW a strong electrical field gradient is produced in the metallization plane near the MP. Particles which translocate the MP due to an applied suction or the like will have a strong interaction with the electrical field at the open end of the CPW and consequently the interaction between the cell and the field will alter the way in which the RF field is reflected back into the RF source or transmitted to another device under test (DUT).

Here, the amplitude and the phase of the reflected or transmitted wave is used to characterize the individual cells, in particular to determine an internal state or a morphological state of the biological cells. As the chip is specifically designed to operate at RF frequencies larger than 700MHz the device will most prominently be sensitive to the intracellular medium of the tested biological cells, e.g. Jurkat T cells. By resuspending Jurkat T cells from a physiological into an unphysiological buffer ist is possible to induce apoptosis (programmed cell death) of the cells which can be measured by tracing the amplitude and/or phase change of the reflected or transmitted signal over the course of the time.

A schematic of the RF chip (device) is shown in Fig. 1(a). The RF chip comprises a borosilicate glass slide (substrate) with a thickness of e.g. $(170\pm5)$ $\mu$m and lateral dimensions of $(24 \times 50)$ mm. Using optical lithography on top of the glass slide a CPW is patterned which may have a macroscopic input port for radio frequency (RF) waves transforming into a thin signal line (width of e.g. 75 $\mu$m) which may have a constant gap of e.g. 50$\mu$m between itself and the ground metallization. As detailed below, the thin signal line does not have a constant gap between itself and the ground metallization but is tapered off, thus introducing a varying gap over the essentially entire length of the signal line (i.e. starting from the RF input). In other words, the signal line is provided with a angle variation in order to increase the bandwith of the CPW. This adaption allows to simultaneously apply a plurality of RF frequencies to the biological cell (e.g. up to 5 frequencies simultaneously) and thus provides cell tomography capabilities together with ultrafast single particle detection.

The signal line has a length of e.g. 3.4 cm which determines the point of operation. For the metallization of the CPW gold (Au) with a thickness of 110nm may be thermally evaporated on top of a 10nm chromium (Cr) adhesion layer after structuring the CPW with standard optical lithographic methods.

The signal line, on which the RF wave is traveling to the sensing region (region around MP or channel through which the biological cell is translocating), has an open end at which a MP is located as is illustrated in a schematic of the top view of the sensing region in Fig. 1. The MP or channel may be embedded between the open end of the signal line and a bulge in the ground metallization thus defining the sensing region of the chip. It may be necessary to isolate most of the signal line from the electrolyte solution in which the cells are suspended. Therefore, the area around the signal region may be covered with a thick (200 $\mu$m) layer of the positive photoresist SU-8 which is isolating the signal region from the liquid but exposing the MP or channel such that negative pressure can be applied from the back side of the chip induce particle translocation through the MP. Furthermore, it be seen in Fig. 1(b) that the ground metallization is moved out forming a half bowtie shape. This reduces fringing fields at sensing region thus focusing the localized electrical field between the open end of the signal line and the ground metallization. The skilled person understands that Fig. 1(b) shows a case in which there is a constant gap between the CPW signal line and the ground metallization. As indicated above, in a preferred embodiment, the CPW signal line may also be provided in such a way that there is a varying gap.

The MP or channel may be drilled into the glass substrate after the lithography steps used for patterning the Au CPW and the SU-8 fluidic chamber. Direct laser ablation from an ArF excimer laser may be used from the back side of the glass chip. This results in conical pores with tunable pore diameters (between 50 nm and 50 $\mu$m) at the signal region. Preferably, the parameters of the drilling process may be adjusted in such a way that a MP or channel with an open diameter of 11 $\mu$m is produced. As the pore is drilled from the backside of the RF chip the positioning of the resulting MP in the sensing region is not trivial. The positioning may be done manually and due to the accuracy of the sample stage in the laser writing unit the MP can be positioned with an accuracy of about $\pm 2\mu$m. To achieve a perfect alignment of the MP with the signal and ground metalization the electrodes are adjusted finally using focused ion beam (FIB) milling and FIB induced metal deposition. For the FIB induced metal deposition, in a first step the Au in the vicinity of the MP is milled away with the gallium beam of the FIB. Additionally, if the pore geometry is not satisfactory at this stage it can be cleaned up with the Ga beam, too. In a next step Pt electrodes are locally patterned such that their tips will have direct contact with the MP. This is done using a Pt containing precursor gas that is locally illuminated with the Ga beam Iin such a way that elementary Pt is deposited, where the precursor gas is hit by the Ga beam. Although the steps allow for precise and local Pt deposition, the deposition step leads to Pt sputtering which albeit leaving only a thin layer on the surrounding glass, still being thick enough to short circuit the signal line with the ground. Therefore, finally the area between the Pt electrode tips is milled with the Ga beam again cleaning the area from the sputtered Pt. An SEM image of the final signal region, as it is used for cell characterization is shown in Fig. 1(c) showing the Au signal line and ground in yellow and the local Pt electrodes in orange. A photograph of the top and bottom of the measurement chip is shown in Fig. 2 (a) and (b), respectively. The glass chip is soldered on a custom-made printed circuit board (PCB) which has two SMA connectors. One connector is used to interface the RF wave into the chip and the second connector is used to apply a constant voltage across a tunable varactor diode. The varactor is used to tune the impedance of the chip to the standard 50W transmission line to which the chip is connected.

Underneath the glass chip a screw cap may be glued in such a way that a pump can be interfaced with the chip (see Fig. 2(b)). The so applied suction induces particle translocations through the MP.

The RF frequency which is used for the measurements is around 700MHz. At this frequencies the AC impedance of cell membrane is substantially lowered, because the cell membrane acts mostly like a capacitor with a capacity of Cm and a resistance of Rm and thus the electrical field can penetrate the cell membrane as schematically shown in Fig. 1(e). Consequently, our measurement is sensitive to the cytoplasm of the individual cells. The interaction of the cell and the electrical field in the sensing region leads to an amplitude modulation (AM) of the carrier wave with the 700MHz frequency. A reflection measurement is done to measure the AM. Directly sampling such frequency signals is experimentally difficult especially if the signals are measured and stored for a long time. Fortunately, the translocation time of particles with diameters in the $\mu$m range which translocate through the MP is in the ms range. As a matter of fact, it is not necessary to sample the high frequency signal but a down-conversion of the frequency may be used advantageously. We use a heterodyne mixing setup to down convert the RF signal to a frequency of e.g. 100MHz while maintaining the amplitude modulation as well as the phase of the signal. The final measurement of the reflected signal may be done using a high-speed lock in amplifier.

A detailed schematic of the whole setup is shown in Fig. 3. The core of the heterodyne mixing setup is a frequency mixer which is used for the frequency down-conversion. A schematic of the mixing is given in Fig. 4. Here, a signal generator is used to produce the high frequency RF wave which is interfaced into the RF chip. Biological cells (or other biological entities) that translocate the signal region disturb the electrical field and thus change the overall impedance of the chip which can be measured as an AM of the reflected or transmitted wave. This amplitude modulation is carried on the reflected RF wave as shown in Fig. 4 and this wave is inputted at the RF input of the frequency mixer. A second signal generator is inputted at the so-called local oscillator (LO) input. This LO has a fixed frequency difference from the RF wave. As a consequence, the intermediate frequency (IF) output of the mixer contains the product of the two waves with frequency components

$$f_{IF} = f_{RF} \pm f_{IF} \quad (1)$$

For the examples presented here, an frequency difference of 100MHz may be chosen. Therefore, the $f_{RF} + f_{IF}$ component has a frequency of $f_{IF} = 2f_{RF} + 100MHz$ and the $f_{RF} - f_{IF}$ component has a frequency of $f_{IF} = 100MHz$. The resulting signal may be measured with a lock-in amplifier which can process frequencies as high as 600 MHz. Due to this bandwidth (BW) limitation of the lock-in input, the high frequency component of the mixing process is filtered out by the input of the lock-in and the measured signal is an AM wave carried by a carrier frequency of 100MHz.

At this frequency the AM input can be directly demodulated by the lock-in using the internal signal generator as a reference wave which is phase locked to the IF signal. As the heterodyne mixing not only preserves the amplitude modulation but preserves a phase of the signal too, a translocating particle can be characterized by three measurement quantities, namely the amplitude of the reflected or transmitted signal, the phase change and the translocation in the following referred to as the width of the event.

Before the translocating particles can be measured the RF chip should preferably be impedance-matched, e.g. to the standard 50Ω transmission line setup. A schematic of the impedance matching circuit is shown in Fig. 2(c). The impedance matching circuit that is mounted on the printed circuit board (PCB) consists of a tunable varactor diode in series with the signal line which is connected to the central pin of the SMA connector. In series to the varactor two surface mount capacitors are located which block any potential DC currents to reach the signal source or the signal region of the RF chip. To block any RF signals to reach the DC source two high ohmic resistors are connected in parallel to the varactor diode. This prevents any RF of reaching the DC source.

This circuit allows to tune the impedance of the overall chip to the 50Ω transmission line to which the chip is connected. It is well known that in RF circuits any mismatch in impedance between the source and a load leads to a reflection of the RF wave back into the source (or to a transmission into a device under test (DUT)). To prevent that the load has to be impedance-matched in such a way that the reflection at the frequency at which the measurement is preformed is minimized according to

$$\Gamma = \frac{Z_0 - Z_{RF\ chip}}{Z_0 + Z_{RF\ chip}}. \quad (2)$$

A DC voltage which is applied to the tunable varactor diode allows to changed $Z_{RF\ chip}$ such that at a certain RF frequency the chip impedance is similar to $Z_0$. Consequently, the RF field is absorbed by the chip thus reaching the signal region.

Results from the impedance matching are given in Fig. 5(a) and (b). In Fig. 5 (a) the reflection of the RF chip is given versus the input frequency and the varactor voltage for a dry chip (i.e. there is no electrolyte solution within the sensing volume). At a certain combination of RF frequency and varactor voltage the reflection shows a minimum which is the point of optimal impedance match. A cut through this point is given for the frequency and voltage sweep, as a black solid and dashed line in Fig. 5(b). The reflection response for a detuned chip is shown in the figure, too. The skilled person understand that for a detuned device a portion of the incoming wave is reflected back without reaching the signal region.

In Fig. 5(c) and (d) the power spectral density (PSD) of a time domain signal is given for an impedance matched (black) and a detuned chip. It can be seen that for an impedance-matched chip the PSD is flat up to frequencies of 1MHz. Consequently, for the time domain measurement, an increased measurement BW will lead to a linear noise contribution because of an absence of high frequency noise. This is in contrast to corresponding pore based resistive pulse measurements which typically show dielectric and capacitive noise contributions that fundamentally limit the BW of such measurements. Another feature of the PSD is the fact that a detuned chip does show an increased low frequency noise contribution. The skilled person understand that this leads to an increased baseline amplitude without introducing any high frequency noise.

In Fig. 6(a) and (b) the result of the measured demodulated amplitude and phase of the reflected RF signal is shown. The temporal peaks in the time traces are originating from individually translocating Jurkat T cells. In Fig. 6(a) the amplitude of the reflected signal is shown together with a zoomed-in view into one individual translocation events. The baseline amplitude is set to about 0.5mV. This is achieved by detuning the RF chip intentionally due to a change of the varactor voltage until the desired baseline amplitude is reached.

In Fig. 6(b) the corresponding phase change is shown. Every amplitude modulation is accompanied by a characteristic phase change. While without a particle the phase is centered around zero a translocating particle first increases the phase to positive angles. When the particle exists the sensing region the phase change makes one characteristic negative phase change before reaching zero again. An overly of a typical translocation event is shown in Fig. 6(c).

For the analysis of this data first a moving average may be applied to the reflected amplitude to produce an estimator for the baseline signal without the temporal cell signals. The window in which the average is evaluated is chosen in such a way that the time evolution of the signal is reproduce by simultaneously rejecting the modulation due to the translocating cells. The moving average is subtracted from the raw data thus leading to a baseline amplitude centered around zero. In this situation a peak finding algorithm may be applied which detects the individual translocation events if they exceed a threshold value of $3 \times \sigma$ of the moving standard deviation. In this manner the position of the transient peaks is determined and the time stamp for every peak is stored globally. Based on the position of the transient AM the position of the first positive phase peak is determined. The phase peak coincides with the position of the amplitude peak. Finally, the peak finding algorithm is used to determine the following negative phase peak. In summary three quantities can be deduced from one translocation event namely the amplitude, the phase, and the width of the event. These measurement quantities are exemplarily shown in Fig. 6 (c).

It was already mentioned that the baseline amplitude of the reflected signal may intentionally be set to 0.5mV by detuning the varactor voltage away from the point of optimal impedance match. This is done because in the presented configuration the lock in amplifier is not capable to phase lock the reflected signal if the input amplitude is too low. In the PSD discussed in Fig. 5(c) and (d) it was shown that such a detuning increases low frequency noise but does not compromise the high frequency noise. A detuned RF chip does lead to a smaller reflected mean amplitude of the individual translocating particles. This is shown in Fig. 6(d). For a number of translocating T cells the mean amplitude is measured. The result of these measurement are repeated for different detunings. The result are shown in the figure. Experimentally it is challenging to reach stable reflected amplitudes that are very small. Interestingly the mean reflected amplitudes are not the highest for the best impedance match but the highest value is measured at about 0.3mV baseline amplitude. Above this value the mean amplitude decreases. Here, a predetermined mean amplitude of e.g. 0.5mV may be chosen because this predetermined mean amplitude provides the best compromise between a stable phase measurement and the highest mean signal amplitude.

Three electrolytes are used for the examples, all of which are summarized in the following Table. The main difference between the electrolytes is their concentration of KCl and NaCl. While the bath solution and the $Ca^{2+}$ buffer are physiological buffers the pipette solution is not physiological if T cells are suspended in it:

| Electrolyte Solution | Recipe | pH | Cite |
|---|---|---|---|
| Bath solution | 5.0mM KCl, 140mM NaCl, 2mM $MgCl_2$, 2mM $CaCl_2$, 10mM HEPES, 5 mM Glucose | 7.4 | 4 |
| Pipette solution | 140mM KCl, 0mM NaCl, 2mM $MgCl_2$, 1mM $CaCl_2$, 10mM HEPES, 2.5 mM EGTA | 7.4 | 4 |
| $Ca^{2+}$ buffer | 5.0mM KCl, 140mM NaCl, 1 mM $CaCl_2$, 1mM $MgSO_2$, 1mM $NaH_2PO_4$, 5.5mM Glucose | 7.4 | 5 |

Particles that are measured in the flow cytometer are polystyrene beads with a diameter of $6\mu m$ and Jurkat T cells.

Here, the beads may be stored at a specific concentration given by the supplier and prior to experiments they are diluted in the desired buffer solution to a concentration of about $10^6$/ml. This concentration is a compromise between a reasonable event rate and the time it is possible to measure before the MP clogs. Especially at experiments with beads clogging can ultimately destroy the RF chip because cleaning the chip from polystyrene beads can be impossible.

Jurkat T cells are kept in culture in RPMI 1640 medium with 7.5% new-born calf serum and 1.2% penicillin/-streptomycin. They are incubated at 37°C at 5% $CO_2$. Under these conditions they are diluted every second day, except of the weekend thus keeping the concentration of the cells constant.

For the experiments the cells are transferred into a measurement buffer. Different buffer are used but the process of transferring is always the same. 5mL of the cell culture is centrifuged for 5min at 2000rpm. The medium is decanted from the resulting cell pellet and the desired buffer is given to the pellet and the cells are gently re-dispersed, to wash the cells. A second similar centrifugation step follows and the buffer is decanted again. Finally, fresh buffer is added to the cell pellet and the re-dispersed sample is ready for the RF measurement.

The present RF device is first tested with a sample of polystyrene beads with a diameter of $6\mu m$. Furthermore, cells which are suspended in a physiological $Ca^{2+}$ measurement buffer are measured. Additionally, the same cells are transferred into a cell buffer which is non-physiological (i.e. the cells are transferred into pipette solution). The main difference between this buffer and the $Ca^{2+}$ buffer is the concentration of the main salt. A physiological $Ca^{2+}$ buffer contains mostly NaCl (140mM). The pipette solution is used in standard patch clamp experiments as the buffer inside the patch pipette thus mimicking the intracellular environment. It contains mostly KCl (140mM). Outside the cell though, it is not physiological and leads to cell death as an internal state of the biological cell which will be sensed with the RF chip.

Results from the three experiments are shown as scatterplots in Fig. 7. Here the correlation between the measured phase and the amplitude, the phase and the width and the amplitude and the width is given. For the cell measurement actually two measurements are shown: solid circles represent the measurements that are done for the chip which is impedance matched to the pipette solution while open circles represent the data captured with a chip that is impedance matched to the $Ca^{2+}$ buffer. The difference in the point of optimal impedance match is only marginal as well as the difference in the resulting data such that both measurements are shown here thus increasing the statistic relevance of the measurement.

In Fig. 7 (a) the phase signal is plotted versus the amplitude of the signals. It can be seen that the beads, illustrated in blue, accumulate at small amplitudes and small phase signals. The data shown is captured for polystyrene beads which were suspended in pipette solution. Corresponding bead measurements in $Ca^{2+}$ buffer are not given because the amplitude modulation was below the noise floor (see discussion in the supplementary). In comparison to the beads the Jurkat T cells, which are suspended in the same buffer are shown in red. The amplitude of the cell signals do show a significantly higher amplitude and a broader phase distribution. Additionally, it can be observed that two correlations between phase and amplitude develop in the scatterplot. This effect can be attributed to cells undergoing apoptosis which is discussed im more detail below. Finally, T cells which are suspended in $Ca^{2+}$ buffer show amplitudes similar to the beads but at a much higher and broader phase signal. The correlation between these two variables is obviously a good choice in terms of separating the three experiments from one another.

Fig. 7(b) gives the correlation between the width and the phase. In contrast to the previous representation the measurements do not show good separation in these two variables. Rather the width of the events is very similar in the three measurements. As the width is a measure for the time the particles spend in the signal region these results indicate that the dynamic between the measurements is similar. Only the beads tend to have lower dwell times in the signal region which is most probably associated with the fact that the beads are substantially smaller than the cells.

Finally, in Fig. 7(c) the correlation between the amplitude and the width is shown. Two striking features are worth noticing here. First it can be seen that the amplitude of the reflected signal is drastically smaller for the T cells if they are suspended in $Ca^{2+}$ buffer in comparison to the pipette solution. Additionally, the reflected amplitude of the cells in the $Ca^{2+}$ buffer is similar to the reflected amplitude of the polystyrene beads although the beads have a diameter of $6\mu m$ while the beads have an average diameter of $13.5\mu m$. The difference here is the buffer again. As a matter of fact the pipette solution does lead to higher reflected amplitudes.

Another observation that can be made is that there is a minimal translocation time which correlates linearly with the amplitude. This minimal translocation time is marked with a dashed black line. The bigger the amplitude the longer the cells tend to stay in the sensing region. This can be explained by the fact that the amplitude is partially a function of the size of the translocating particle. As most of the cells are bigger than the MP it is expected that they will need to squeeze through the pore while having mechanical contact to the pore walls. The bigger the cells are, the bigger the reflected amplitude and consequently the more mechanical contact which slows the cell down. At a critic amplitude the linear correlation disappears.

It was already shown in Fig. 7(a) that the correlation between the phase and the amplitude exhibits two distinct correlations if the cells are transferred into an unphysiological buffer. This will be discussed in more detail below. To do that the experiment is repeated with the pipette solution and compared to cells transferred into bath solution. Similar to the $Ca^{2+}$ buffer the bath solution is the standard buffer use in patch clamping experiments as the cell buffer. It contains mostly NaCl in a 140mM concentration and is thus physiological. The correlation between the phase and the amplitude is given in Fig. 8(a).

Green dots represent the data from the cell which were transferred into the physiological buffer. Under these conditions it is not expected that the cells are biologically altered. Patch clamp measurements were done as a control and the measurements indicate that the cells tend to be stable and unaffected over hours. This behavior is in accordance to the findings given in Fig. 8 (a). Only one positive correlation between amplitude and phase is observed over a measurement period of 25min. It is expected that the correlation is positive as bigger amplitudes are at least partially correlated with the size of the particle and consequently bigger particles will affect the phase signal, too.

In contrast to that, cells which are transferred into an unphysiological buffer do show a completely different behavior. The effect has been observed in the measurement shown in Fig. 7 and the effect is reproducible as shown as violet dots in Fig. 8 (a). Again two correlations are visible.

To interpret the results the time evolution of the amplitude und the phase is plotted versus the occurrence of the events during the experiment. These results are given in Fig. 8 (c) and (d) for the cells in the physiological buffer and the unphysiological one, respectively. In Fig. 8 (c) it can be seen that in the case of physiological buffer the reflected amplitude is stable over the course of the experiment which takes approximately 26min. The same is true for the phase of the reflected signal. In the data set there is one long time spans where no events are measured. The time when these periods start are marked with dashed black lines. These interruptions are caused by the fact that the chip is dismounted for cleaning the MP when the pore is clogged irreversibly. In general dismounting and reintegrating does not alter the electronic response drastically as was shown in an experiment where the amplitude and phase signal of translocating polystyrene beads is measured over the course of over an hour. Although the experiment is interrupted by at least 50 min the two data sets are in good accordance to one another. Small gaps in the time traces are caused by temporal clogging of the MP which can be freed by applying a short but strong pressure pulse.

In the experiment in which the cells are transferred into the unphysiological pipette solution (Fig. 8 (d)) the amplitude of the reflected amplitude is stable, too. In contrast to that the phase signal is decreased after the first cleaning of the chip. It is worth noticing that the phase remains at a lower level for the remaining experiment which is indicating that the effect is due to a change in the cell properties.

As such a behavior is not observed for neither the bead measurements nor the cell measurements in $Ca^{2+}$ buffer and bath solution we conclude that the environmental stress caused by the unphysiological conditions causes this effect. To further study this effect time resolved microscopy on the T cells may be performed when they are suspended in the pipette solution. The results from this experiments are shown in Fig. 9. Three cells are shown here which are exposed to the buffer for 55min. At the beginning (i.e. t = 0min up to t = 15min) the cells look normal. But shortly after that the cell membrane starts to become wrinkly and the cell size decreases. This decrease in size is an indication for the cells loosing intracellular liquid. At t = 30min the cells appearance becomes darker and the nucleus becomes visible. Over the whole measurement period the cells stay intact. This is a behavior which is well known from apoptotic cells. Accordingly the internal state or the morphological state of the cell can be determined.

The presented results show that it is possible to measure the translocation of Jurkat T cells and polystyrene beads with diameters of $6\mu m$ through a MP with a diameter of $11\mu m$. A slight detuning of the RF chip advantageously allows us to measure not only the temporal modulated amplitude of the reflected signal but the simultaneous phase change that are caused by the translocating particles. Cells that are measured in a physiological buffer show a stable correlation between the amplitude and the phase. In contrast to that, if the cells are suspended in the unphysiological buffer the phase changes during the experiment which can be traced over time. Additionally, it is observed that within the unphysiological buffer the overall amplitude of the translocation events is increases significantly when compared to the results of cell translocation in the physiological buffer. This effect is correlated to an increased membrane conductivity which is know from literature und here is measured using patch clamping experiments. This effect can be qualitatively reproduced using FEM simulations on a model system. Time domain optical microscopy proved that the cells undergo apoptosis so that it has been conclusively be demonstrated to sense this biological process in the time domain.

## Claims

1. A label-free, single biological cell dielectric spectroscopy method, comprising the steps of:

   - translocating a biological cell through a micropore or channel embedded in a substrate and interfaced with a coplanar waveguide while the biological cell experiences RF fields of at least 700 MHz provided via an RF input port to the coplanar waveguide;
   - performing a time domain measurement of at least one RF signal reflected from or transmitted to a device under test (DUT); and
   - determining an amplitude change and a phase change based on the reflected or transmitted at least one RF signal due to the translocating biological cell to determine an internal state or a morphological state of the biological cell,
   wherein the translocating biological cell simultaneously experiences a plurality of RF fields of different wavelengths and
   **characterised in that**
   the coplanar waveguide is configured as a multi-mode coplanar waveguide by providing a tapered transition electrode.

2. The label-free, single biological cell dielectric spectroscopy method according to claim 1, wherein the time domain reflectometry measurement is performed with regard to a plurality of RF signals simultaneously reflected from the RF input port.

3. The label-free, single biological cell dielectric spectroscopy method according to claim 2, wherein the amplitude change and the phase change is determined for each of the simultaneous RF signals.

4. The label-free, single biological cell dielectric spectroscopy method according to claim 1, wherein the tapered transition electrode is tapered off toward the micropore or the channel.

5. The label-free, single biological cell dielectric spectroscopy method according to any of claims 1 - 4, wherein the internal state of the biological cell is a cell death state of the biological cell.

6. The label-free, single biological cell dielectric spectroscopy method according to any of claims 1 - 5, further comprising:

- detecting apoptotic cell death of the biological cell if the determined phase change is a predetermined value below a corresponding phase change of a non-apoptotic biological cell while the determined amplitude change corresponds to an amplitude change of the non-apoptotic biological cell.

7. A device for performing label-free, single biological cell dielectric spectroscopy, the device comprising:

- a micropore or channel embedded in a substrate and interfaced with a coplanar waveguide, the micropore or channel being configured for translocating a biological cell through a micropore while the biological cell experiences RF fields of at least 700 MHz provided via an RF input port to the coplanar waveguide;
- a measurement unit for performing a time domain measurement of at least one RF signal reflected from or transmitted to a device under test (DUT); and
- a determination unit for determining an amplitude change and a phase change based on the reflected at least one RF signal due to the translocating biological cell to determine an internal state of the biological cell,
wherein the device is configured so that the translocating biological cell simultaneously experiences a plurality of RF fields of different wavelengths and
**characterised in that**
the coplanar waveguide is configured as a multi-mode coplanar waveguide by providing a tapered transition electrode.

**Patentansprüche**

1. Verfahren zur markierungsfreien, dielektrischen Spektroskopie einer einzelnen biologischen Zelle, umfassend die Schritte von:

- Translozieren einer biologischen Zelle durch eine Micropore oder einen Kanal, die/der in ein Substrat eingebettet und mit einem koplanaren Wellenleiter gekoppelt ist, während die biologische Zelle HF-Felder mit einer Frequenz von mindestens 700 MHz erfährt, die über einen HF-Eingangsport an den koplanaren Wellenleiter bereitgestellt werden;
- Durchführen einer Zeitbereichsmessung von mindestens einem HF-Signal, das von oder zu einem Prüfling (DUT) reflektiert oder übertragen wird; und
- Bestimmen einer Amplitudenänderung und einer Phasenänderung basierend auf dem mindestens einen HF-Signal, das infolge der Translokation der biologischen Zelle reflektiert oder übertragen wird, um einen inneren Zustand oder einen morphologischen Zustand der biologischen Zelle zu bestimmen,
wobei die translozierende biologische Zelle gleichzeitig eine Vielzahl von HF-Feldern unterschiedlicher Wellenlängen erfährt und
**dadurch gekennzeichnet, dass**
der koplanare Wellenleiter als Mehrmoden-koplanarer Wellenleiter ausgebildet ist, indem eine verjüngte Übergangselektrode bereitgestellt wird.

2. Verfahren zur markierungsfreien, dielektrischen Spektroskopie einer einzelnen biologischen Zelle nach Anspruch 1, wobei die Messung mittels Zeitbereichsreflektometrie hinsichtlich einer Vielzahl von HF-Signalen durchgeführt wird, die gleichzeitig von dem HF-Eingangsport reflektiert werden.

3. Verfahren zur markierungsfreien, dielektrischen Spektroskopie einer einzelnen biologischen Zelle nach Anspruch 2, wobei die Amplitudenänderung und die Phasenänderung für jedes der gleichzeitigen HF-Signale bestimmt werden.

4. Verfahren zur markierungsfreien, dielektrischen Spektroskopie einer einzelnen biologischen Zelle nach Anspruch 1, wobei die verjüngte Übergangselektrode sich in Richtung der Mikropore oder des Kanals verjüngt.

5. Verfahren zur markierungsfreien, dielektrischen Spektroskopie einer einzelnen biologischen Zelle nach einem der Ansprüche 1 - 4, wobei der innere Zustand der biologischen Zelle ein Zelltodzustand der biologischen Zelle ist.

6. Verfahren zur markierungsfreien, dielektrischen Spektroskopie einer einzelnen biologischen Zelle nach einem der Ansprüche 1 - 5, weiter umfassend:

- Detektieren von apoptotischem Zelltod der biologischen Zelle, wenn die bestimmte Phasenänderung ein vorbestimmter Wert ist, der kleiner ist als eine entsprechende Phasenänderung einer nicht apoptotischen biologischen Zelle, während die bestimmte Amplitudenänderung einer Amplitudenänderung der nicht apoptotischen biologischen Zelle entspricht.

7. Vorrichtung zur Durchführung einer markierungsfreien, dielektrischen Spektroskopie einer einzelnen biologischen Zelle, wobei die Vorrichtung Folgendes umfasst:

- eine Mikropore oder einen Kanal, eingebettet in ein Substrat und gekoppelt mit einem koplanaren Wellenleiter, wobei die Mikropore oder der Kanal so ausgebildet ist, dass eine biologische Zelle durch eine Mikropore transloziert wird, während die biologische Zelle HF-Felder mit einer Frequenz von mindestens 700 MHz erfährt, die über einen HF-Eingangsport an den koplanaren Wellenleiter bereitgestellt werden;
- eine Messeinheit zum Durchführen einer Zeitbereichsmessung von mindestens einem HF-Signal, das von oder zu einem Prüfling (DUT) reflektiert oder übertragen wird; und
- eine Bestimmungseinheit zum Bestimmen einer Amplitudenänderung und einer Phasenänderung basierend auf dem mindestens einen HF-Signal, das infolge der Translokation der biologischen Zelle reflektiert wird, um einen inneren Zustand der biologischen Zelle zu bestimmen,
wobei die Vorrichtung so ausgebildet ist, dass die translozierende biologische Zelle gleichzeitig eine Vielzahl von HF-Feldern unterschiedlicher Wellenlängen erfährt und
**dadurch gekennzeichnet, dass**
der koplanare Wellenleiter als Mehrmoden-koplanarer Wellenleiter ausgebildet ist, indem eine verjüngte Übergangselektrode bereitgestellt wird.

## Revendications

1. Procédé de spectroscopie diélectrique de cellule biologique unique sans étiquette, comprenant les étapes de :

- translocation d'une cellule biologique à travers un micropore ou un canal intégré dans un substrat et interfacé avec un guide d'ondes coplanaire, tandis que la cellule biologique est soumise à des champs **RF** d'au moins 700 MHz fournis via un port d'entrée port **RF** au guide d'ondes coplanaire ;
- réalisation d'une mesure dans le domaine temporel d'au moins un signal **RF** réfléchi par ou transmis à un dispositif sous test (DUT) ; et
- détermination d'une variation d'amplitude et une variation de phase sur la base dudit au moins un signal **RF** réfléchi ou transmis en raison de la cellule biologique en cours de translocation, afin de déterminer un état interne ou un état morphologique de la cellule biologique,
dans lequel la cellule biologique en cours de translocation est simultanément soumise à une pluralité de champs **RF** de longueurs d'onde différentes et
**caractérisé en ce que**
le guide d'ondes coplanaire est configuré en guide d'ondes coplanaire multimode par la mise en place d'une électrode de transition conique.

2. Procédé de spectroscopie diélectrique de cellule biologique unique sans étiquette selon la revendication 1, dans lequel la mesure de réflectométrie dans le domaine temporel est réalisée sur une pluralité de signaux **RF** réfléchis simultanément depuis le port d'entrée RF.

3. Procédé de spectroscopie diélectrique de cellule biologique unique sans étiquette selon la revendication 2, dans lequel les variations d'amplitude et de phase sont déterminées pour chacun des signaux **RF** simultanés.

4. Procédé de spectroscopie diélectrique de cellule biologique unique sans étiquette selon la revendication 1, dans lequel l'électrode de transition conique est décroissante en direction du micropore ou du canal.

5. Procédé de spectroscopie diélectrique de cellule biologique unique sans étiquette selon l'une quelconque des revendications 1 à 4, dans lequel l'état interne de la cellule biologique est un état de mort cellulaire de la cellule biologique.

6. Procédé de spectroscopie diélectrique de cellule biologique unique sans étiquette selon l'une quelconque des revendications 1 à 5, comprenant en outre :

- la détection d'une mort cellulaire apoptotique de la cellule biologique si la variation de phase déterminée est une valeur prédéterminée inférieure à une variation de phase correspondante d'une cellule biologique non apoptotique, tandis que la variation d'amplitude déterminée correspond à une variation d'amplitude de la cellule biologique non apoptotique.

7. Dispositif pour réaliser une spectroscopie diélectrique de cellule biologique unique sans étiquette, le dispositif comprenant :

- un micropore ou un canal intégré dans un substrat et interfacé avec un guide d'ondes coplanaire, le micropore ou le canal étant configuré pour transloquer une cellule biologique à travers un micropore tandis que la cellule biologique est soumise à des champs **RF** d'au moins 700 MHz fournis via un port d'entrée RF au guide d'ondes coplanaire ;
- une unité de mesure pour réaliser une mesure dans le domaine temporel d'au moins un signal **RF** réfléchi par ou transmis à un dispositif sous test (DUT) ; et
- une unité de détermination pour déterminer une variation d'amplitude et une variation de phase sur la base dudit au moins un signal **RF** réfléchi du fait de la cellule biologique en cours de translocation, afin de déterminer un état interne de la cellule biologique,

dans lequel le dispositif est configuré de sorte que la cellule biologique en cours de translocation est simultanément soumise à une pluralité de champs RF de longueurs d'onde différentes et

**caractérisé en ce que**

le guide d'ondes coplanaire est configuré en guide d'ondes coplanaire multimode par la mise en place d'une électrode de transition conique.

FIG. 1

FIG. 2

FIG. 3

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015035546 A1
- US 10151741 B

**Non-patent literature cited in the description**

- **SCHWAN et al.** *Proceedings of the IEEE*, 1980, vol. 68, 104-113
- **GABRIEL et al.** *Physics in Medicine and Biology*, 1996, vol. 41, 2271-2293
- **SUN et al.** *Langmuir*, 2010, vol. 26, 3821-3828
- **SUN et al.** *Microfluidics and Nanofluidics*, 2010, vol. 8, 423-443
- **AYLIFFE et al.** *Journal of Microelectromechanical Systems*, 1999, vol. 8, 50-57
- **WOOD et al.** *Applied Physics Letters*, 2005, vol. 87, 184106
- **BAUSCH et al.** *Scientific Reports*, 2017, vol. 7, 41584
- **FERRIER et al.** *Lab on a Chip*, 2009, vol. 9, 3406
- **YANG YANG et al.** Distinguishing the viability of a single yeast cell with an ultra-sensitive radio frequency sensor. *LAB ON A CHIP, UK*, 26 January 2010, vol. 10 (5), ISSN 1473-0197, 553